# EUROPÄISCHE PATENTANMELDUNG

(11) **EP 2 922 179 A1**
(43) Veröffentlichungstag der Anmeldung: **23.09.2015**
(21) Anmeldenummer: 14160250.8
(22) Anmeldetag: 17.03.2014
(51) Int. Cl.: H02K 1/30, B63H 5/00, H02K 1/32, H02K 7/00

(54) **Rotor einer rotierenden elektrischen Maschine**

(71) Anmelder: Siemens Aktiengesellschaft, 80333 München (DE)
(72) Erfinder: Balzer, Christoph, 12163 Berlin (DE); Balke, Benjamin, 10589 Berlin (DE); Seibicke, Frank, 14822 Borkheide (DE)

(57) **Zusammenfassung**

Die Erfindung betrifft einen Rotor (1) einer rotierenden elektrischen Maschine. Der Rotor (1) umfasst eine zweiteilige Rotorwelle (3), die aus zwei entlang einer Rotorachse (5) hintereinander angeordneten und miteinander verbundenen Rotorwellenteilen (7, 9) besteht, ein ringförmiges Rotorblechpaket (17), das um einen Abschnitt eines ersten Rotorwellenteils (7) herum angeordnet ist, und mehrere Wellenstege (19), die den ersten Rotorwellenteil (7) mit dem Rotorblechpaket (17) verbinden.

## Beschreibung

Die Erfindung betrifft einen Rotor einer rotierenden elektrischen Maschine.

Rotoren rotierender elektrischer Maschinen weisen Rotorblechpakete auf, die sich im Betrieb der Rotoren erwärmen und aus denen daher Wärme abgeführt werden muss. Die im Rotorblechpaket entstehende Wärme wird in der Regel über radiale Kühlschlitze im Rotorblechpaket abgeführt, manchmal auch über im Rotorblechpaket eingebrachte axial verlaufende Kühlkanäle.

Der Erfindung liegt die Aufgabe zugrunde, einen verbesserten Rotor einer rotierenden elektrischen Maschine anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Ein erfindungsgemäßer Rotor einer rotierenden elektrischen Maschine umfasst eine zweiteilige Rotorwelle, die aus zwei entlang einer Rotorachse hintereinander angeordneten und miteinander verbundenen Rotorwellenteilen besteht, ein ringförmiges Rotorblechpaket, das um einen Abschnitt eines ersten Rotorwellenteils herum angeordnet ist, und mehrere Wellenstege, die den ersten Rotorwellenteil mit dem Rotorblechpaket verbinden.

Die mehrteilige Ausführung der Rotorwelle verbessert gegenüber einer einteiligen Ausführung die Biegefestigkeit der Rotorwelle und ermöglicht überdies die Installation eines Drehmomentenmesssystems in einem Verbindungsbereich zweier Rotorwellenteile. Die zweiteilige Ausführung minimiert gegenüber einer Ausführung mit mehr als zwei Rotorwellenteilen vorteilhaft den Herstellungsaufwand und den zum Verbinden der Rotorwellenteile erforderlichen Montageaufwand, wodurch signifikante Kostenvorteile ermöglicht werden. Die Verbindung des Rotorblechpaketes mit der Rotorwelle über Wellenstege ist gegenüber bekannten Rotorausführungen, bei denen das Rotorblechpaket direkt an einem als Hohlwelle ausgebildeten Rotorwellenabschnitt angeordnet wird, kostengünstiger und ermöglicht dabei ebenso gute Biegesteifigkeitseigenschaften wie diese Rotorausführungen.

Eine Ausgestaltung der Erfindung sieht eine Flanschverbindung zur Verbindung der beiden Rotorwellenteile vor.

Eine Flanschverbindung ermöglicht vorteilhaft eine einfache und zuverlässige Verbindung der Rotorwellenteile.

Dabei weist der erste Rotorwellenteil vorzugsweise einen mit den Wellenstegen verbundenen Flansch der Flanschverbindung auf.

Die Verbindung der Wellenstege mit dem Flansch verbessert vorteilhaft die Steifigkeit und Stabilität des Rotors, da am Steggrund eines Wellensteges abtriebsseitig die größten Tangentialspannungen auftreten.

Ferner ist zwischen den Flanschen der Flanschverbindung vorzugsweise ein Drehmomentenmesssystem zur Erfassung eines von dem Rotor erzeugten Drehmoments angeordnet.

Dadurch wird die Flanschverbindung vorteilhaft zur Installation eines Drehmomentenmesssystems genutzt.

Eine weitere Ausgestaltung der Erfindung sieht hohlzylindersegmentförmig ausgebildete Kanalbleche vor, die jeweils zwischen zwei Wellenstegen angeordnet und an diesen Wellenstegen befestigt sind.

Derart ausgebildete und angeordnete Kanalbleche erhöhen vorteilhaft weiter die Biegesteifigkeit der Rotorwellenausführung. Insbesondere können die Kanalbleche derart ausgeführt werden, dass sie eine trommelförmige Kanalblechanordnung um den ersten Rotorwellenteil herum bilden, die die Biegesteifigkeit analog zu einer Hohlwellenausführung verbessert.

Dabei ist jedes Kanalblech vorzugsweise von einer Innenoberfläche des Rotorblechpaketes beabstandet und bildet mit der Innenoberfläche des Rotorblechpaketes einen parallel zu der Rotorachse verlaufenden ersten Kühlkanal.

Dadurch werden vorteilhaft axial verlaufende erste Kühlkanäle gebildet, die die Kühlung des Rotors verbessern.

Eine weitere Ausgestaltung der Erfindung sieht vor, dass die Innenoberfläche des Rotorblechpaketes parallel zu der Rotorachse verlaufende Kühlrippen aufweist.

Dadurch wird die Innenoberfläche des Rotorblechpaketes vergrößert und damit die Kühlfähigkeit der Innenoberfläche des Rotorblechpaketes vorteilhaft verbessert.

Eine weitere Ausgestaltung der Erfindung sieht wenigstens einen parallel zu der Rotorachse durch das Rotorblechpaket verlaufenden zweiten Kühlkanal vor.

Damit wird die Kühlung des Rotorblechpaketes weiter verbessert. Axial verlaufende Kühlkanäle ermöglichen außerdem vorteilhaft eine Verkürzung des Rotorblechpaketes gegenüber Ausführungen mit radial im Rotorblechpaket angeordneten Kühlschlitzen.

Die Erfindung sieht ferner die Verwendung eines erfindungsgemäßen Rotors insbesondere als Rotor einer rotierenden elektrischen Maschine einer Propellergondel, die auch als Pod-Antrieb bezeichnet wird, vor.

Diese Verwendung erfindungsgemäßer Rotoren ist insbesondere für Propellergondeln von Wasserfahrzeugen vorteilhaft, bei denen die Propellergondeln direkt im Wasser liegen, da dafür schlank ausgebildete Rotoren strömungstechnisch besonders bevorzugt sind und die Erfindung aufgrund der Axialbelüftung der Rotoren die Konstruktion längerer und damit bei gleicher Leistung schmalerer Rotoren ermöglicht. Dabei wird vorteilhaft ausgenutzt, dass die axiale Länge einer Propellergondel im Unterschied zu ihrem Durchmesser den hydrodynamischen Wirkungsgrad nicht beeinträchtigt.

Ferner ermöglicht die zweiteilige Ausführung erfindungsgemäßer Rotoren, wie bereits oben ausgeführt wurde, die Installation eines Drehmomentenmesssystems (und optional weiterer Sensoren) in einem Verbindungsbereich der Rotorwellenteile, die insbesondere für Pod-Antriebe vorteilhaft ist, da für diese Antriebe heute verstärkt eine Zustandsüberwachung durch Integration so genannter Condition Monitoring-Systeme gefordert wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein erstes Ausführungsbeispiel eines Rotors einer rotierenden elektrischen Maschine in einer Querschnittdarstellung,
- FIG 2: das erste Ausführungsbeispiel eines Rotors einer rotierenden elektrischen Maschine in einer Längsschnittdarstellung,
- FIG 3: ein zweites Ausführungsbeispiel eines Rotors einer rotierenden elektrischen Maschine in einer perspektivischen Längsschnittdarstellung,
- FIG 4: das zweite Ausführungsbeispiel eines Rotors einer rotierenden elektrischen Maschine in einer ersten Seitenansicht, und
- FIG 5: das zweite Ausführungsbeispiel eines Rotors einer rotierenden elektrischen Maschine in einer zweiten Seitenansicht.

Einander entsprechende Teile sind in allen Figuren mit den gleichen Bezugszeichen versehen.

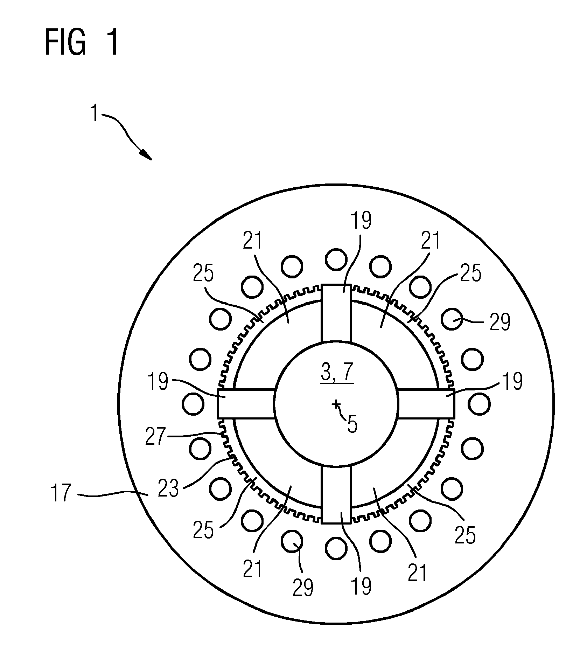

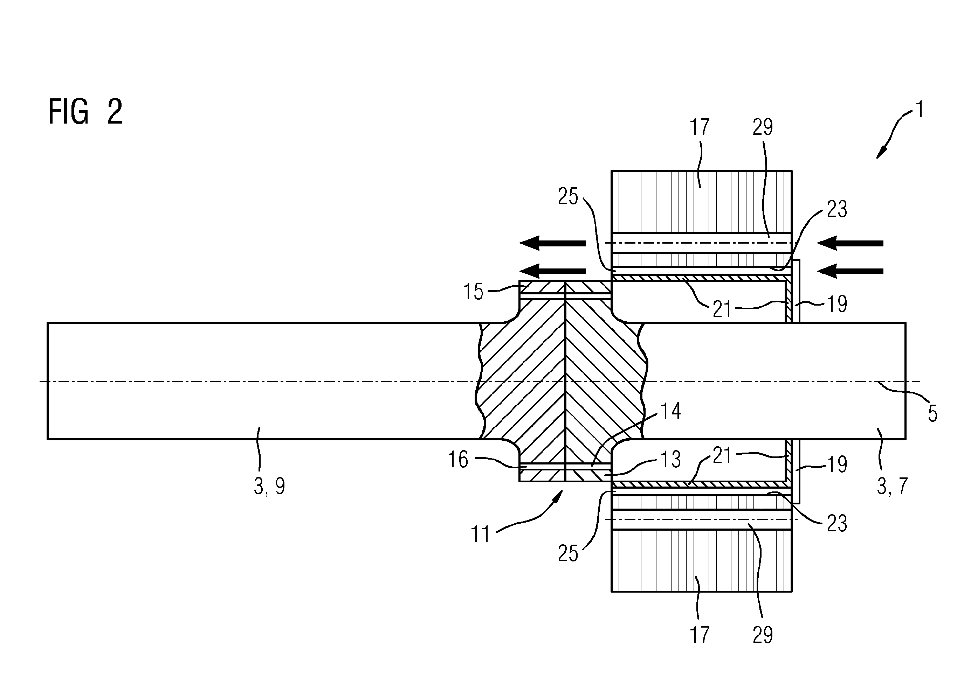

Die Figuren 1 und 2 zeigen ein erstes Ausführungsbeispiel eines Rotors 1 einer rotierenden elektrischen Maschine. Dabei zeigt Figur 1 eine Querschnittdarstellung des Rotors 1 und Figur 2 zeigt eine Längsschnittdarstellung des Rotors 1.

Der Rotor 1 umfasst eine zweiteilige Rotorwelle 3, die aus zwei entlang einer Rotorachse 5 hintereinander angeordneten Rotorwellenteilen 7, 9 besteht. Die Rotorwellenteile 7, 9 sind mittels einer Flanschverbindung 11 miteinander verbunden, die einen ersten Flansch 13 eines ersten Rotorwellenteils 7 und einen zweiten Flansch 15 des zweiten Rotorwellenteils 9 umfasst. Die Rotorachse 5 definiert eine zu ihr parallele axiale Richtung.

Der erste Flansch 13 weist erste Verbindungsbohrungen 14 auf und der zweite Flansch weist dazu korrespondierende zweite Verbindungsbohrungen 16 auf, durch die Verbindungselemente, beispielsweise Verbindungsschrauben, zur Verbindung der Flansche 13, 15 geführt werden.

Ferner umfasst der Rotor 1 ein ringförmiges Rotorblechpaket 17, das um einen Abschnitt des ersten Rotorwellenteils 7 herum angeordnet ist und mit dem ersten Rotorwellenteil 7 durch vier Wellenstege 19 verbunden ist. Dabei verlaufen die Wellenstege 19 sternförmig und bezüglich der Rotorachse 5 radial von dem ersten Rotorwellenteil 7 zu dem Rotorblechpaket 17 und sind an einem axialen Ende jeweils mit dem zweiten Flansch 13 verbunden.

Des Weiteren umfasst der Rotor 1 hohlzylindersegmentförmig ausgebildete Kanalbleche 21, die jeweils zwischen zwei Wellenstegen 19 angeordnet und an diesen Wellenstegen 19 befestigt, beispielsweise angeschweißt, sind und von einer Innenoberfläche 23 des Rotorblechpaketes 17 durch einen parallel zu der Rotorachse 5 verlaufenden ersten Kühlkanal 25 getrennt sind. Dabei schließen die rotorblechpaketseitigen Oberflächen der ersten Kanalbleche 21 mit den von der Rotorachse 5 abgewandten Oberflächen der Flansche 13, 15 ab. Die hohlzylindersegmentförmige Ausbildung der Kanalbleche 21 und deren Anordnung zwischen den Wellenstegen 19 resultiert in einer trommelförmigen Kanalblechanordnung um den ersten Rotorwellenteil 7 herum, die die Biegesteifigkeit der Rotorwellenausführung analog zu einer Hohlwellenausführung verbessert.

Die Innenoberfläche 23 des Rotorblechpaketes 17 weist parallel zu der Rotorachse 5 verlaufende Kühlrippen 27 auf. Durch das Rotorblechpaket 17 verlaufen parallel zu der Rotorachse 5 zweite Kühlkanäle 29.

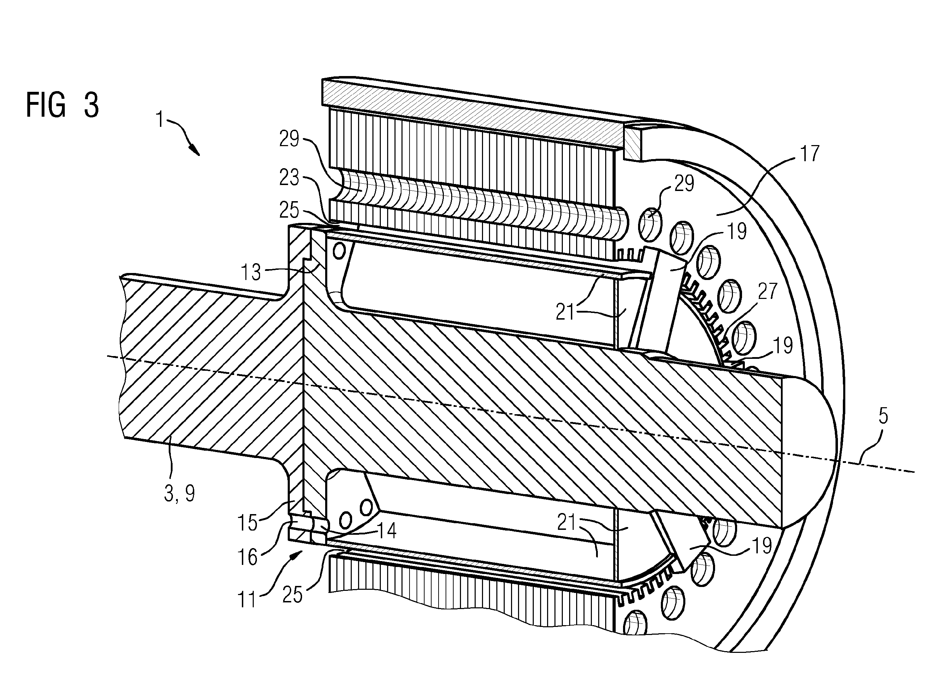

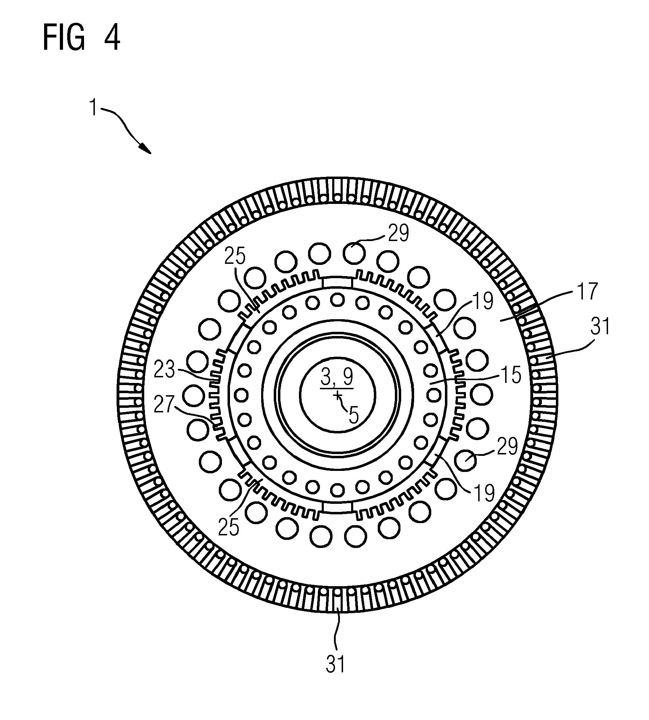

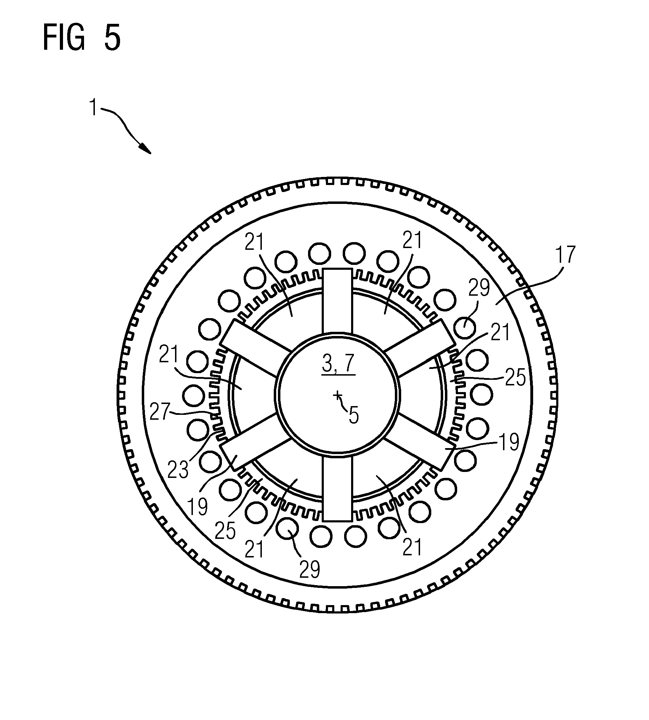

Die Figuren 3 bis 5 zeigen ein zweites Ausführungsbeispiel eines Rotors 1 einer rotierenden elektrischen Maschine. Dieses Ausführungsbeispiel unterscheidet sich von dem in den Figuren 1 und 2 dargestellten ersten Ausführungsbeispiel im Wesentlichen lediglich dadurch, dass es sechs Wellenstege 19 und entsprechend sechs zwischen den Wellenstegen 19 angeordnete Kanalbleche 21 aufweist. Figur 3 zeigt eine perspektivische Längsschnittdarstellung des Rotors 1 dieses Ausführungsbeispiels. Die Figuren 4 und 5 zeigen zwei verschiedene Seitenansichten des Rotors 1, wobei Figur 4 eine Seitenansicht auf den zweiten Rotorwellenteil 9 zeigt und Figur 5 eine Seitenansicht auf den ersten Rotorwellenteil 7 zeigt. Figur 4 zeigt auch Kurzschlussrotorstäbe 31, die am Umfang des Rotorblechpaketes 17 angeordnet sind.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Beispielsweise kann ein erfindungsgemäßer Rotor eine von vier und sechs verschiedene Anzahl von Wellenstegen 19 und Kanalblechen 21 aufweisen, die Innenoberfläche 23 des Rotorblechpaketes 17 kann glatt (ohne Kühlrippen 27) ausgebildet sein und/oder das Rotorblechpaket 17 kann ohne zweite Kühlkanäle 29 ausgebildet sein.

## Patentansprüche

1. Rotor (1) einer rotierenden elektrischen Maschine, umfassend
- eine zweiteilige Rotorwelle (3), die aus zwei entlang einer Rotorachse (5) hintereinander angeordneten und miteinander verbundenen Rotorwellenteilen (7, 9) besteht,
- ein ringförmiges Rotorblechpaket (17), das um einen Abschnitt eines ersten Rotorwellenteils (7) herum angeordnet ist,
- und mehrere Wellenstege (19), die den ersten Rotorwellenteil (7) mit dem Rotorblechpaket (17) verbinden.

2. Rotor (1) nach Anspruch 1,
**gekennzeichnet durch** eine Flanschverbindung (11) zur Verbindung der beiden Rotorwellenteile (7, 9).

3. Rotor (1) nach Anspruch 2,
**dadurch gekennzeichnet, dass** der erste Rotorwellenteil (7) einen mit den Wellenstegen (19) verbundenen ersten Flansch (13) der Flanschverbindung (11) aufweist.

4. Rotor (1) nach Anspruch 2 oder 3,
**gekennzeichnet durch** ein zwischen den Flanschen (13, 15) der Flanschverbindung (11) angeordnetes Drehmomentenmesssystem zur Erfassung eines von dem Rotor (1) erzeugten Drehmoments.

5. Rotor (1) nach einem der vorhergehenden Ansprüche,
**gekennzeichnet durch** hohlzylindersegmentförmig ausgebildete Kanalbleche (21), die jeweils zwischen zwei Wellenstegen (19) angeordnet und an diesen Wellenstegen (19) befestigt sind.

6. Rotor (1) nach Anspruch 5,
**dadurch gekennzeichnet, dass** jedes Kanalblech (21) von einer Innenoberfläche (23) des Rotorblechpaketes (17) beabstandet ist und mit der Innenoberfläche (23) des Rotorblechpaketes (17) einen parallel zu der Rotorachse (5) verlaufenden ersten Kühlkanal (25) bildet.

7. Rotor (1) nach einem der vorhergehenden Ansprüche,
**dadurch gekennzeichnet, dass** eine Innenoberfläche (23) des Rotorblechpaketes (17) parallel zu der Rotorachse (5) verlaufende Kühlrippen (27) aufweist.

8. Rotor (1) nach einem der vorhergehenden Ansprüche,
**gekennzeichnet durch** wenigstens einen parallel zu der Rotorachse (5) **durch** das Rotorblechpaket (17) verlaufenden zweiten Kühlkanal (29).

9. Propellergondel mit einer rotierenden elektrischen Maschine, die einen Rotor (1) gemäß einem der vorhergehenden Ansprüche aufweist.
